# EUROPÄISCHE PATENTSCHRIFT

(11) **EP 1 564 439 B1**
(45) Veröffentlichungstag und Bekanntmachung des Hinweises auf die Patenterteilung: **14.11.2007**
(21) Anmeldenummer: 04100584.4
(22) Anmeldetag: 13.02.2004
(51) Int. Cl.: F16H 3/60

(54) **Schaltgetriebe**
Gearbox
Boîte de vitesses

(43) Veröffentlichungstag der Anmeldung: 17.08.2005
(73) Patentinhaber: Getrag Ford Transmissions GmbH, 50725 Köln (DE); Ford-Werke GmbH, 50735 Köln (DE)
(72) Erfinder: Absenger, Marc, 42285 Wuppertal (DE); Doerfler, Thomas, Dr., 50374 Erftstadt (DE)
(74) Vertreter: Drömer, Hans-Carsten

(56) Entgegenhaltungen:
- DE-A- 10 143 994
- FR-A- 1 000 079
- US-A- 5 520 587
- US-A- 5 830 099
- US-B1- 6 440 032

## Beschreibung

Die Erfindung betrifft ein Schaltgetriebe mit einem Rückwärtsgang, insbesondere für Kraftfahrzeuge, gemäß dem Oberbegriff des Patentanspruches 1.

Das Schaltgetriebe gemäß dem Obergriff beschreibt ein übliches derzeitiges Schaltgetriebe, wie es z. B. in der US 5830099 beschrieben ist, und wie es auch in Kraftfahrzeugen verwendet wird. Der Rückwärtsgang ist bei der US 5830099 mittels eines Umkehrgetriebes realisiert, wobei das Umkehrgetriebe einen Kegelradsatz ähnlich dem eines Differentialgetriebes aufweist. Das Umkehrgetriebe ist frei drehbar auf einer separaten, im Gehäuse gelagerten Achse angeordnet. Das eingangsseitige Kegelrad ist mit der Eingangswelle des Schaltgetriebes nichtschaltbar getrieblich verbunden. Das ausgangsseitige Kegelrad ist getrieblich über ein auf der Eingangswelle angeordnetes Losrad fest mit einem Zahnrad auf der Ausgangswelle verbunden. Ist der Rückwärtsgang nicht geschaltet, kann sich der Planetenradträger mit den Ausgleichskegelrädern frei drehen und es wird kein Drehmoment zwischen den beiden Kegelrädern übertragen. Zur Schaltung des Rückwärtsganges weist der Planetenradträger ein Zackenrad auf, mittels dem er über eine Klinkenrastvorrichtung am Gehäuse festgelegt wird. Dies hat zur Folge, das zwischen eingangsseitigem und ausgangsseitigem Kegelrad eine Drehrichtungsumkehr stattfindet, wobei das Eingangsdrehmoment durch die Festsetzung des Planetenradträgers vollständig auf das ausgangsseitige Kegelrad übertragen wird.

Mittels dieser Anordnung des Umkehrgetriebes kann lediglich der Rückwärtsgang geschaltet werden, wodurch der Platzbedarf recht groß ist, da die Vorwärtsgänge separat geschaltet werden und deshalb zusätzliche Zahnradsätze notwendig sind. Zudem ist eine Synchronisierung des Rückwärtsganges nur schwierig zu realisieren.

Aufgabe der Erfindung ist es deshalb, ein Schaltgetriebe zu schaffen, das eine platzsparende Anordnung des Rückwärtsganges erlaubt und bei dem die Gesamtzahl der Zahnräder möglichst gering ist. Weiterhin soll die Möglichkeit bestehen, den Rückwärtsgang voll zu synchronisieren.

Gelöst wird diese Aufgabe mit den Merkmalen des Patentanspruches 1.

Indem das Losrad mittels eines Umkehrgetriebes und zweier Schaltvorrichtungen getrieblich mit der zweiten Welle verbindbar ist, wobei die erste Schaltvorrichtung einen Vorwärtsgang und die zweite Schaltvorrichtung einen Rückwärtsgang schaltet, kann ein sehr kompakter Aufbau des Schaltgetriebes erreicht werden. Es entfällt mindestens ein Zahnradsatz und die dazugehörige Welle bzw. Achse, die für die Drehrichtungsumkehr des Rückwärtsganges erforderlich sind. Das Umkehrgetriebe selbst kann ein beliebiges geeignetes Umkehrgetriebe sein, welches gegenüber üblichen Zahnradpaaren wesentlich einfacher gefertigt sein kann.

Vorteilhaft weist das Umkehrgetriebe, welches koaxial zur zweiten Welle angeordnet ist, ein erstes Ringzahnrad, das fest mit dem Losrad verbunden ist, ein zweites Ringzahnrad, das fest mit der zweiten Welle verbunden ist, und Planetenräder auf, wobei die Planetenräder auf einem frei auf der zweiten Welle drehbaren Planetenradträger angeordnet sind. Dabei kann jedes Planetenrad mit erstem und zweitem Ringzahnrad in getrieblicher Verbindung stehen, oder, wie bei Planetenrad-Ausgleichsgetrieben, zwei Planetenräder kämmen selbst miteinander und je eines mit einem Ringzahnrad. Damit wird ein sehr kompakter Aufbau erreicht, da die Planetenräder aufgrund ihrer Anzahl sehr klein sein können. Weiterhin weist diese Anordnung eine große Flexibilität hinsichtlich der Anordnung der Schaltvorrichtungen auf: Für den Vorwärtsgang kann die erste Schaltvorrichtung entweder Planetenradträger und zweite Welle, Planetenradträger und Losrad, oder Losrad und zweite Welle drehfest verbinden. Für die Schaltung des Rückwärtsganges kann der Planetenradträger über die zweite Schaltvorrichtung mit dem Gehäuse drehfest verbunden werden.

Vorteilhaft ist zur Schaltung des Rückwärtsganges der Planetenradträger über die zweite Schaltvorrichtung mit dem Gehäuse des Schaltgetriebes verbindbar. Dabei kann eine übliche Schaltvorrichtung, wie sie aus dem Stand der Technik für Schaltgetriebe bekannt ist, verwendet werden. Vorteilhaft ist diese voll synchronisiert, es sind jedoch auch alle anderen geeigneten Schaltvorrichtungen geeignet, die den Planetenradträger gegenüber dem Gehäuse festsetzen.

Die Schaltung des Vorwärtsganges kann auf verschiedene Weise erfolgen: Entweder das Losrad wird mittels der ersten Schaltvorrichtung mit der zweiten Welle verbindbar. Dann wird unter Umgehung des Planetenradträgers das Antriebsmoment direkt vom Losrad über die Schaltvorrichtung auf die zweite Welle übertragen. Oder der Planetenradträger wird mittels der ersten Schaltvorrichtung mit dem Losrad verbunden. Oder der Planetenradträger wird mittels der ersten Schaltvorrichtung mit der zweiten Welle verbunden. Damit stehen drei grundlegende konstruktive Varianten zur Verfügung, den Vorwärtsgang mit der zweiten Welle zu schalten. Dies erhöht den Gestaltungsspielraum bei der Konstruktion wesentlich.

Vorteilhaft ist das Umkehrgetriebe wie ein Kegelrad-Ausgleichsgetriebe angeordnet, indem die Ringzahnräder und die Planetenräder Kegelräder sind. Dies entspricht in der Anordnung einem üblichen Ausgleichsgetriebe bzw. Differentialgetriebe in einem Kraftfahrzeug, wobei aber die Kraftübertragung anders ist. Im Leerlauf, wenn weder Vorwärts- noch Rückwärtsgang geschaltet sind, dreht sich der Planetenradträger mit der gemittelten Drehzahl von Losrad und zweiter Welle. Im Vorwärtsgang sind Losrad, Planetenradträger und zweite Welle gegeneinander festgelegt, alle drehen sich mit gleicher Drehzahl. Im Rückwärtsgang steht der Planetenradträger vorzugsweise fest, während die zweite Welle sich mit gleicher Drehzahl wie das Losrad, aber in entgegengesetzter Richtung dreht.

In einer weiteren Ausführung weisen die Ringzahnräder unterschiedliche Durchmesser auf und die Achsen der Planeten-Kegelräder stehen schräg. Dies kann notwendig sein, wenn für Vorwärts- und Rückwärtsgang unterschiedliche Übersetzungsverhältnisse realisiert werden müssen. Der Vorwärtsgang hat dann die Drehzahl des Losrades, während der Rückwärtsgang entsprechend der Richtung der Neigung der Achsen entweder zusätzlich untersetzt oder übersetzt ist, und der Neigungsgrad das Über- bzw. Untersetzungsverhältnis bestimmt.

Vorteilhaft weist der Planetenradträger einen Absatz auf, auf dem das Losrad drehbar gelagert angeordnet ist. Dies ermöglicht die Vormontage der gesamten Vorwärts- und Rückwärtsganganordnung auf dem Planetenradträger, so daß zur Montage im Schaltgetriebe diese Anordnung nur noch auf die zweite Welle geschoben werden muß.

Vorteilhaft ist eine Schaltvorrichtung mit dem Absatz des Planetenradträgers verbunden, wobei das Losrad zwischen den Planetenrädern und der Schaltvorrichtung auf dem Absatz angeordnet ist. Damit kann wahlweise die Schaltvorrichtung den Vorwärtsgang oder den Rückwärtsgang schalten. Für den Vorwärtsgang verbindet die Schaltvorrichtung den Planetenradträger entweder mit dem Losrad oder mit der zweiten Welle. Für den Rückwärtsgang verbindet die Schaltvorrichtung den Planetenradträger mit dem Schaltgetriebegehäuse.

Vorteilhaft sind erste und zweite Schaltvorrichtung durch eine Doppelschaltvorrichtung gebildet, die auf dem Planetenradträger angeordnet ist, wobei in der ersten Schaltrichtung das Losrad oder die zweite Welle mit dem Planetenradträger verbindbar ist, und in der zweiten Schaltrichtung der Planetenradträger mit dem Schaltgetriebegehäuse. Damit läßt sich ein sehr platzsparender Aufbau erreichen, ähnlich wie bei den Doppelschaltvorrichtung in derzeitigen Schaltbetrieben.

In einer weiteren Ausführung ist das Umkehrgetriebe ein Planetenradsatz. Dies wäre der Extremfall des Umkehrgetriebes als Kegelrad-Ausgleichsgetriebe, wenn die Achsen der Planetenräder parallel zur zweiten Welle verlaufen. Eine solche Anordnung ist sinnvoll, wenn die vom Losrad übertragenen Vor- und Rückwärtsgänge sehr unterschiedliche Übersetzungsverhältnisse aufweisen sollen.

In einer weiteren Ausführung kann das Umkehrgetriebe ein Planetenrad-Ausgleichsgetriebe sein, wobei dann zwei Planetenräder selbst miteinander kämmen und je ein Planetenrad davon kämmt mit je einem Ringzahnrad. Dies erlaubt eine sehr kompakte Bauweise in axialer Richtung bei gleichen Übersetzungsverhältnissen für Vor- und Rückwärtsgang.

Alle Umkehrgetriebe können auch innerhalb der Schaltvorrichtung selbst angeordnet sein, insbesondere wenn diese als Doppelschaltvorrichtung ausgebildet ist. Dann ist der axial - in Wellenrichtung gesehen - benötigte Bauraum minimal, da nur das Losrad und die Schaltvorrichtung auf der zweiten Welle untergebracht werden müssen.

Prinzipiell ist es bei dieser Erfindung auch möglich, daß der Rückwärtsgang geschaltet wird, indem Losrad und zweite Welle drehfest verbunden sind und der Vorwärtsgang geschaltet wird, indem der Planetenradträger am Gehäuse festgelegt wird. In diesem Fall wird der Rückwärtsgang direkt geschaltet, während die Drehrichtung beim Vorwärtsgang stattfindet. Dies kann aus verschiedenen konstruktiven Gründen hilfreich oder erforderliche sein und erhöht die Flexibilität beim Einsatz des erfindungsgemäßen Schaltgetriebes.

Weitere Einzelheiten und Ausführungen sind der folgenden Beschreibung und den dazugehörigen Figuren zu entnehmen. Es zeigen:
- Fig. 1: einen Teilschnitt durch die Vor- und Rückwärtsganganordnung eines erfindungsgemäßen Schaltgetriebes;
- Fig. 2: eine schematische Darstellung mit einem Kegelrad-Ausgleichsgetriebe mit schrägstehenden Achsen;
- Fig. 3: eine schematische Darstellung mit einer Doppelschaltung für zwei Vorwärtsgänge und separater Rückwärtsgangschaltung;
- Fig. 4: eine weitere schematische Darstellung mit einer Doppelschaltung für zwei Vorwärtsgänge und separater Rückwärtsgangschaltung;
- Fig. 5: eine schematische Darstellung mit einem Kegelrad-Ausgleichsgetriebe, angeordnet innerhalb einer Doppelschaltvorrichtung;
- Fig. 6: eine schematische Darstellung mit einem Planetenradsatz als Umkehrgetriebe; und
- Fig. 7: eine schematische Darstellung mit einem Planetenrad-Ausgleichsgetriebe, angeordnet innerhalb einer Doppelschaltvorrichtung.

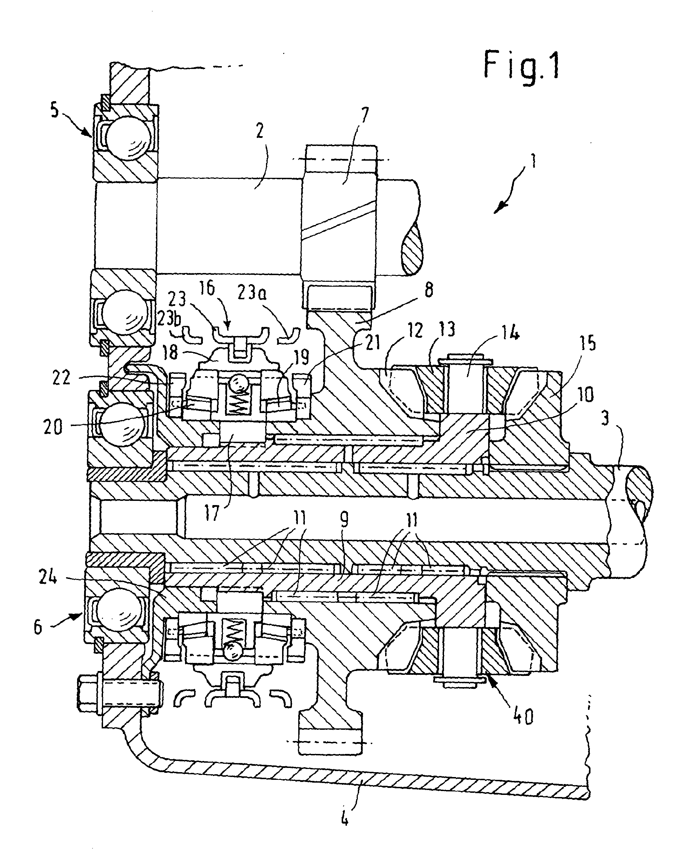

In Figur 1 ist eine Teilansicht eines Schnittes durch ein erfindungsgemäßes Schaltgetriebe 1 mit einer ersten Welle 2 und einer zweiten Welle 3, die beide im Getriebegehäuse 4 mittels der Wälzlager 5 und 6 gelagert sind. Das Festrad 7 ist als Zahnrad auf der ersten Welle 2 ausgeformt und dadurch fest mit dieser verbunden. Es befindet sich in getrieblichem Eingriff mit dem Losrad 8, welches frei drehbar auf dem Absatz 9 des Planetenradträgers 10 angeordnet ist. Der Planetenradträger 10 selbst ist frei drehbar auf der zweiten Welle 3 angeordnet. Für eine möglichst reibungsfreie Drehlagerung sind Losrad 8 und Planetenradträger 10 bzw. Planetenradträger 10 und zweiter Welle 3 mittels Nadeln 11 von Nadellagern gegeneinander gelagert.

Das Umkehrgetriebe 40 wird im wesentlichen gebildet durch das Ringkegelrad 12, die Planetenkegelräder 13, das Ringkegelrad 15 und dem Planetenradträger 10. Das erste Ringkegelrad 12 ist als Teil des Losrades 8, und es kämmt mit mehreren Planetenkegelräder 13, die auf den am Planetenradträger 10 befestigten Achsen 14 drehbar gelagert angeordnet sind. Zusätzlich kämmen die Planetenkegelräder 13 mit dem zweiten Ringkegelrad 15, welches fest mit der zweiten Welle 3 verbunden ist.

Am Ende des Absatzes 9 des Planetenradträgers 10 ist die Doppelschaltvorrichtung 16 angeordnet. Sie besteht im wesentlichen aus dem Schaltnabe 17, der Schaltmuffe 18, den Synchronringen 19 und 20 und den Schaltverzahnungen 21 und 22. Die Schaltmuffe 18 ist axial in Wellenrichtung verschiebbar, aber drehfest auf der Schaltnabe 17, die fest mit dem Absatz 9 verbunden ist, angeordnet. Verschoben wird die Schaltmuffe 18 mittels der Schaltgabel 23. Dabei markieren die Positionen der symbolisch gezeigten Schaltgabeln 23a bzw. 23b die jeweilige maximale axiale Verschiebung der Schaltgabel 23 und damit der Schaltmuffe 18. Die Schaltverzahnung 21 ist als Teil des Losrades 8 ausgeformt. Die Schaltverzahnung 22 ist am Schaltträger 24 befestigt, welcher wiederum fest mit dem Getriebegehäuse 4 verbunden ist.

Geschaltet werden Vor- bzw. Rückwärtsgang durch die Schaltmuffe 18. In Neutralstellung, was der Position der Schaltgabel 23 entspricht, kann sich der Planetenradträger 10 frei zwischen Losrad 8 und zweiter Welle 3 drehen. Aufgrund der getrieblichen Kopplung zwischen erstem Ringkegelrad 12, den Planetenkegelrädern 13 und dem zweiten Ringkegelrad 15 stellt sich für den Planetenradträger 10 eine gemittelte Drehzahl ein aus den Drehzahlen des Losrades 8 und der zweiten Welle 3. Damit besteht keine kraftmäßige Kopplung zwischen erster Welle 2 und zweiter Welle 3 über die Kombination Festrad 7 mit Losrad 8, sieht man von geringen Reibungs- und Schleppverlusten der Konstruktion ab, und es können dadurch in Neutralstellung beliebig andere Übersetzungsverhältnisse zwischen erster und zweiter Welle mittels hier nicht gezeigter Zahnradkombinationen geschaltet werden.

Für die folgende Beschreibung des Schaltvorganges von Vorwärtsgang und Rückwärtsgang wird angenommen, daß eine nicht dargestellte Schaltkupplung auf der ersten Welle 2 angeordnet ist und die erste Welle 2 während des Schaltvorganges durch die Schaltvorrichtung 16 entsprechend beschleunigt bzw. abgebremst werden kann. Befände sich die Schaltkupplung auf der zweiten Welle 3 und wäre diese entsprechend frei drehbar, würde sich die Wirkungsweise entsprechend ändern. Dies bedeutet auch, daß es für die Anwendung des Schaltgetriebes unerheblich ist, ob die erste oder die zweite Welle die antreibende Welle und die jeweils andere die abtreibende Welle ist. Dies erhöht die Flexibilität bezüglich des möglichen Einsatzes des erfindungsgemäßen Schaltgetriebes.

Für den Vorwärtsgang wird die Schaltmuffe 18 in Richtung der Schaltgabel 23a verschoben. Dabei schleift der Synchronisierring 19 zwischen Losrad 8 und Planetenradträger 10, wodurch beide gegeneinander abgebremst werden, d.h. die Differenzdrehzahl verringert sich. Aufgrund der getrieblichen Kopplung von Losrad 8 und zweiter Welle 3 über die Ringkegelräder 12 und 15 und die Planetenkegelräder 13 nähert sich die Drehzahl von Losrad 8 und Planetenradträger 10 der Drehzahl der zweiten Welle 3 an. Das heißt aber, absolut kann die Drehzahl sinken oder steigen. Über die getriebliche Kopplung von Festrad 7 mit Losrad 8 wird die erste Welle 2 ebenfalls entsprechend gebremst bzw. beschleunigt.

Sobald das Losrad 8. bzw. der Planetenradträger 10 die Drehzahl der zweiten Welle erreicht hat, greift die Schaltmuffe 18 in die Schaltverzahnung 21 des Losrades 8, so das Losrad 8 und Planetenradträger 10 drehfest verbunden sind. Über die getriebliche Kopplung der Planetenkegelräder 13 ist damit auch die zweite Welle 3 drehfest mit dem Losrad 8 verbunden. Damit sind die auch erste Welle 2 und die zweite Welle 3 mittels des Übersetzungsverhältnisses von der Kombination Festrad 7 und Losrad 8 getrieblich verbunden; der Vorwärtsgang ist geschaltet.

Für den Rückwärtsgang wird die Schaltmuffe 18 in Richtung der Schaltgabel 23b verschoben. Dabei wirkt der Synchronisierring 20 auf den Schaltträger 24 und bremst den Planetenradträger 10 gegenüber dem Getriebegehäuse 4 ab. Im Gegensatz zur Schaltung beim Vorwärtsgang wird durch diesen Synchronisiervorgang das Losrad 8 nicht auf die Drehzahl der zweiten Welle gebracht, sondern, sollte sich die zweite Welle 2 drehen, auf eine Drehzahl entgegengesetzt der zweiten Welle 4, bedingt durch die getriebliche Kopplung über die Planetenkegelräder 13. Entsprechend wird auch die erste Welle 2 genau entgegengesetzt ihrer ursprünglichen Drehrichtung beschleunigt. Da der Rückwärtsgang in der Regel im Stillstand bzw. bei sehr geringen Rollgeschwindigkeiten eingelegt wird, stellt dies für die Synchronisierung keine übermäßige Belastung dar.

Sobald der Planetenradträger gegenüber dem Getriebegehäuse 4 stillsteht, greift die Schaltmuffe in die Schaltverzahnung 22 auf dem Schaltträger 24 und der Planetenradträger 10 ist drehfest mit dem Getriebegehäuse 4 geschaltet. Die Drehung des Losrades 8 wird dann über das Ringkegelrad 12 und den jetzt auf den feststehenden Achsen 14 angeordneten Planetenkegelrädern 13 in eine umgekehrte Drehung des Ringkegelrades 15 und damit der zweiten Welle 3 übertragen. Damit steht die erste Welle 2 mit der zweiten Welle 3 in umgekehrter getrieblicher Verbindung; der Rückwärtsgang ist geschaltet.

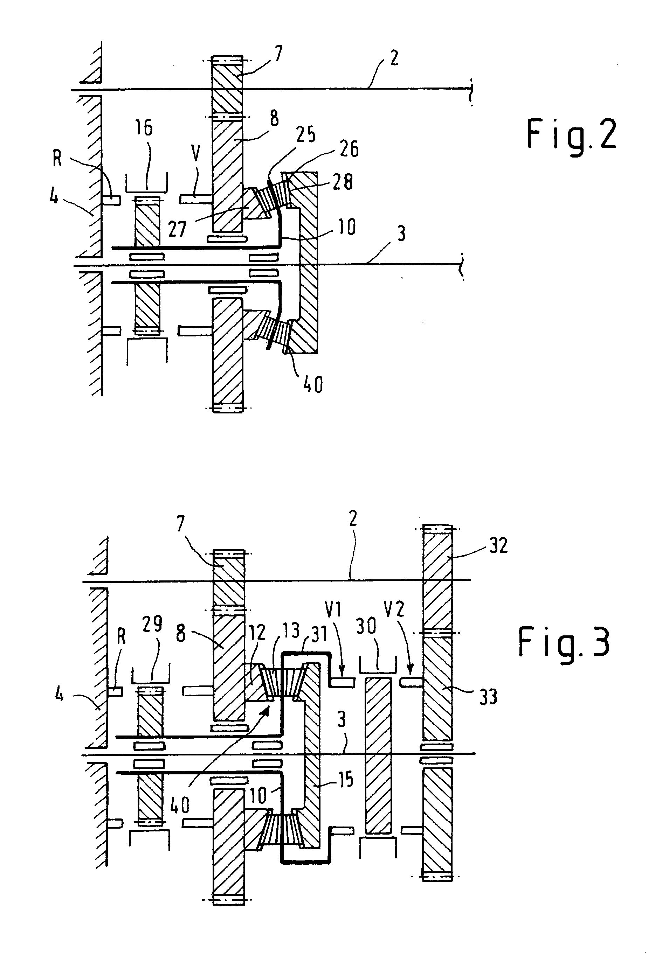

Figur 2 zeigt eine ähnliche schematische Anordnung wie in Figur 1. Allerdings sind hier die Achsen 25 des Planetenradträgers 10 geneigt. Die auf den geneigten Achsen 25 gelagerten Planetenkegelräder 26 wirken jetzt mit zwei Ringkegelräder 27 und 28 zusammen, wobei das Ringkegelrad 27 mit dem Losrad 8 verbunden ist und einen geringeren Durchmesser aufweist als das Ringkegelrad 28, welches mit der zweiten Welle 3 verbunden ist. Bei dieser Neigung der Achsen 25 weist der Rückwärtsgang R eine kleinere Übersetzung auf als der Vorwärtsgang V.

Wären die Achsen in die andere Richtung geneigt, so daß das Ringkegelrad 28 einen geringeren Durchmesser aufweisen würde als Ringkegelrad 27, wäre das Übersetzungsverhältnis vom Rückwärtsgang R größer als das vom Vorwärtsgang V.

Figur 3 zeigt eine weitere schematische Darstellung eines Schaltgetriebes, wobei der Rückwärtsgang über die Schaltverzahnung R wie in Figur 1 über die Schaltvorrichtung 29 geschaltet wird. Der Vorwärtsgang wird über die Schaltverzahnung V1 mit der Doppelschaltvorrichtung 30 geschaltet, die auf der zweiten Welle 2 angeordnet ist. Die Schaltverzahnung V1 ist über einen Ringflansch 31 fest dem Planentenradträger 10 verbunden. Die Doppelschaltvorrichtung 30 schaltet auch einen weiteren Vorwärtsgang über die Schaltverzahnung V2, wobei das Festrad 32 auf der ersten Welle 2 festsitzt, während Losrad 33 frei drehbar auf der weiten Welle 3 angeordnet ist.

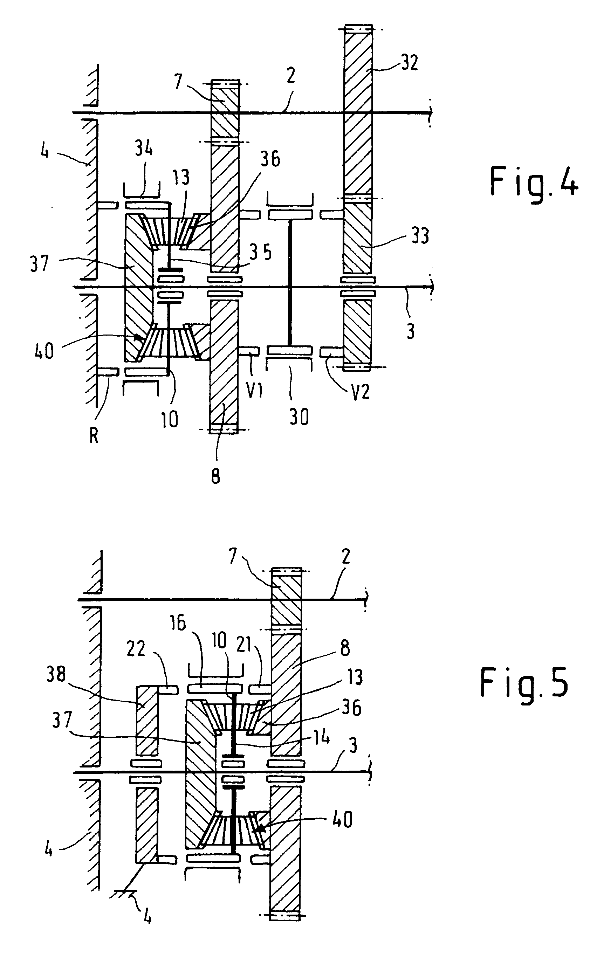

Das Schaltgetriebe in Figur 4 zeigt eine prinzipiell andere Anordnung als in den vorhergehenden Figuren. Das Losrad 8 ist über die Schaltverzahnung V1 mittels der Doppelschaltvorrichtung 30 direkt mit der zweiten Welle 3 schaltbar verbunden. Über die Schaltverzahnung V2 ist ein zweiter Vorwärtsgang schaltbar, wie in Figur 3 bereits gezeigt. Im Unterschied dazu wird der Rückwärtsgang über die Schaltverzahnung R und die Schaltvorrichtung 34 geschaltet. Diese ist direkt mit den Achsen 35, auf denen die Planetenkegelräder 13 gelagert sind, verbunden, stellt damit quasi den Planetenradträger 10 dar. Das Ringkegelrad 36 ist auch hier als Teil des Losrades 8 ausgeformt, während das andere Ringkegelrad 37 fest auf der zweiten Welle 3 sitzt, allerdings jetzt direkt benachbart der Schaltverzahnung R. Dies erlaubt ein vorteilhafte, platzsparend Unterbringung des Umkehrgetriebes innerhalb der Schaltvorrichtung 34.

Eine weitere Variante von Figur 4 entsteht wie in Figur 5 gezeigt, wenn die Doppelschaltvorrichtung 16 auf dem Planetenradträger 10 angeordnet ist, und daß Umkehrgetriebe 40 innerhalb dieser Schaltvorrichtung 16 angeordnet ist. Der Planetenradträger 10 bildet so mit den Achsen 14 und der Schaltvorrichtung 16 eine sehr kompakte Einheit. Erstes Ringzahnrad 36, das als Teil des Losrades 8 ausgeformt ist, und zweites Ringzahnrad 37, das fest mit der zweiten Welle 3 verbunden ist, weisen einen kleineren Durchmesser auf als der Innendurchmesser der Schaltvorrichtung 16 und können so problemlos innerhalb dieser angeordnet sein. Die Schaltvorrichtung wirkt wie in Figur 1 beschrieben zusammen mit der Schaltverzahnung 21 am Losrad für den Vorwärtsgang und mit der Schaltverzahnung 22 für den Rückwärtsgang.

Die Schaltverzahnung 22 ist hier an einem Schaltträger 38 ausgebildet, der frei drehbar auf der zweiten Welle 3 angeordnet ist. Die Drehfestlegung des Schaltträgers 38 gegenüber dem Gehäuse 4 kann durch jede geeignete konstruktive Maßnahme erfolgen. Dadurch ist es nicht erforderlich, die Schaltverzahnung 22 direkt benachbart des Gehäuses 4 selbst anzuordnen. Vielmehr kann sich der Schaltträger 38 an beliebiger Stelle auf der zweiten Welle 3 befinden, solange nur die Drehfestlegung gegenüber dem Gehäuse 4 erfolgt.

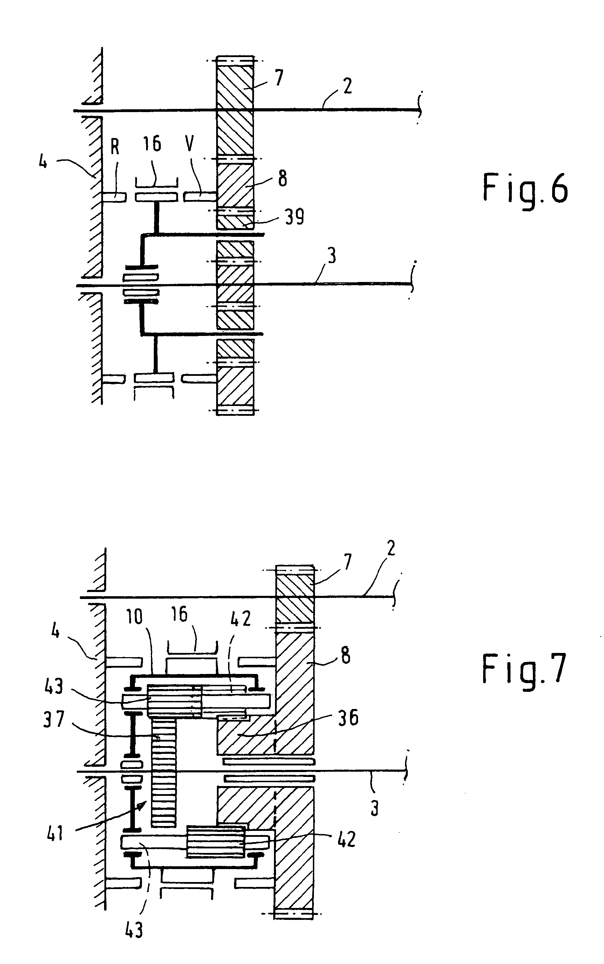

Figur 6 zeigt eine ähnliche Anordnung wie in Figur 1 und 2, allerdings ist das Umkehrgetriebe jetzt als Planetenradsatz 39 ausgeführt. Dies ermöglicht einen sehr platzsparenden Aufbau der Anordnung. Allerdings weisen Vor- und Rückwärtsgang jetzt sehr unterschiedliche Übersetzungsverhältnisse auf. Dies kann genutzt werden, wenn z. B. Rückwärtsgang und 1. Gang nicht mittels der Doppelschaltvorrichtung 16 geschaltet werden sollen, und/ oder wenn der Rückwärtsgang direkt geschaltet werden soll, sondern die Drehrichtungsumkehr beim Vorwärtsgang erfolgt.

In Figur 7 ist die Verwendung eines Planetenrad-Ausgleichsgetriebes 41 als Umkehrgetriebe dargestellt. Im Prinzip entspricht die Anordnung bezüglich Wellen und Schaltung Figur 5, lediglich das Kegelrad-Ausgleichsgetriebe ist durch ein Planetenrad-Ausgleichsgetriebe ersetzt. Die Ringzahnräder 36 und 37 sind hier als Stirnzahnräder ausgeführt. Außerdem werden jetzt jeweils zwei Planetenräder 42, 43 benötigt, die mit sich selber kämmen, und wovon das erste Planetenrad 42 mit dem ersten Ringzahnrad 36 und das zweite Planetenrad 43 mit dem zweiten Ringzahnrad 37 kämmt. Beide Planetenräder 42 und 43 sind im Planetenradträger 10 gelagert, der frei drehbar gegenüber Losrad 8 und zweiter Welle 3 angeordnet ist. Je nach Anforderung sind am Umfang mehrerer Sätze von Planetenrädern 42 und 43 vorhanden, die alle jeweils die gleiche Anordnung aufweisen.

Selbstverständlich sind alle hier gezeigten und besprochenen Merkmale beliebig miteinander kombinierbar, auch wenn hier im einzelnen nicht erwähnt.

## Patentansprüche

1. Schaltgetriebe (1) mit einem Rückwärtsgang, insbesondere für Kraftfahrzeuge, mit zwei in einem Gehäuse (4) gelagerten Wellen, die über einen Zahnradsatz schaltbar in getrieblicher Verbindung stehen, wobei der Zahnradsatz ein Festrad (7) auf der ersten Welle (2) und ein Losrad (8) auf der zweiten Welle (3) aufweist,
**dadurch gekennzeichnet, daß**
das Losrad (8) mittels eines Umkehrgetriebes (40) und Schaltvorrichtungen (16) getrieblich mit der zweiten Welle (3) verbindbar ist, wobei eine erste Schaltvorrichtung einen Vorwärtsgang und eine zweite Schaltvorrichtung einen Rückwärtsgang schaltet.

2. Schaltgetriebe nach Anspruch 1,
**dadurch gekennzeichnet, daß**
das Umkehrgetriebe (40) koaxial zur zweiten Welle (3) angeordnet ist und ein erstes Ringzahnrad (12), das fest mit dem Losrad (8) verbunden ist, ein zweites Ringzahnrad (15), das fest mit der zweiten Welle (3) verbunden ist, und Planetenräder (13) aufweist, die auf einem frei auf der zweiten Welle (3) drehbaren Planetenradträger (10) angeordnet sind.

3. Schaltgetriebe nach Anspruch 2,
**dadurch gekennzeichnet, daß**
zur Schaltung des Rückwärtsganges der Planetenradträger (10) über die zweite Schaltvorrichtung mit dem Gehäuse (4) des Schaltgetriebes verbindbar ist.

4. Schaltgetriebe nach Anspruch 1, 2 oder 3,
**dadurch gekennzeichnet, daß**
zur Schaltung des Vorwärtsganges das Losrad (8) mittels der ersten Schaltvorrichtung mit der zweiten Welle (3) verbindbar ist.

5. Schaltgetriebe nach Anspruch 2 oder 3,
**dadurch gekennzeichnet, daß**
zur Schaltung des Vorwärtsganges der Planetenradträger (10) mittels der ersten Schaltvorrichtung mit dem Losrad (8) verbindbar ist.

6. Schaltgetriebe nach Anspruch 2 oder 3,
**dadurch gekennzeichnet, daß**
zur Schaltung des Vorwärtsganges der Planetenradträger (10) mittels der ersten Schaltvorrichtung mit der zweiten Welle (3) verbindbar ist.

7. Schaltgetriebe nach einem der Ansprüche 2 bis 6 ,
**dadurch gekennzeichnet, daß**
das Umkehrgetriebe (40) ein Kegelrad-Ausgleichsgetriebe ist, wobei die Ringzahnräder (12, 15) und die Planetenräder (13) Kegelräder sind, und jedes Planetenrad (13) mit erstem und zweitem Ringzahnrad (12, 15) in getrieblicher Verbindung steht.

8. Schaltgetriebe nach Anspruch 7,
**dadurch gekennzeichnet, daß**
die Ringzahnräder (27, 28) unterschiedliche Durchmesser aufweisen und die Achsen (25) der Planeten-Kegelräder (26) schräg stehen.

9. Schaltgetriebe nach einem der Ansprüche 2 bis 8,
**dadurch gekennzeichnet, daß**
der Planetenradträger (10) einen Absatz (9) aufweist, auf dem das Losrad (8) drehbar gelagert angeordnet ist.

10. Schaltgetriebe nach Anspruch 9,
**dadurch gekennzeichnet, daß**
eine Schaltvorrichtung (16) mit dem Absatz (9) des Planetenradträgers (10) verbunden ist, wobei das Losrad (8) zwischen den Planetenrädern (13) und der Schaltvorrichtung (16) auf dem Absatz (9) angeordnet ist.

11. Schaltgetriebe nach einem der Ansprüche 1 bis 6,
**dadurch gekennzeichnet, daß**
das Umkehrgetriebe ein Planetenradsatz (39) ist.

12. Schaltgetriebe nach einem der Ansprüche 1 bis 6,
**dadurch gekennzeichnet, daß**
das Umkehrgetriebe ein Planetenrad-Ausgleichsgetriebe (41) ist.

13. Schaltgetriebe nach einem der Ansprüche 2 bis 12,
**dadurch gekennzeichnet, daß**
erste und zweite Schaltvorrichtung durch eine Doppelschaltvorrichtung (16) gebildet sind, wobei die Doppelschaltvorrichtung (16) auf dem Planetenradträger (10) angeordnet ist, und wobei in der ersten Schaltrichtung das Losrad (8) oder die zweite Welle (3) mit dem Planetenradträger (10) verbindbar ist, und in der zweiten Schaltrichtung der Planetenradträger (10) mit dem Gehäuse (4).

14. Schaltgetriebe nach einem der vorherigen Ansprüche,
**dadurch gekennzeichnet, daß**
das Umkehrgetriebe (41) innerhalb einer Schaltvorrichtung angeordnet ist.

15. Schaltgetriebe nach einem der vorherigen Ansprüche,
**dadurch gekennzeichnet, daß**
daß der Rückwärtsgang geschaltet wird, indem Losrad (8) und zweite Welle (3) drehfest verbunden sind und der Vorwärtsgang geschaltet wird, indem der Planetenradträger (10) am Gehäuse (4) festgelegt wird.

## Claims

1. Manual shift transmission (1) with a reverse gear, especially for motor vehicles, having two shafts, which are supported in a housing (4) and are in shiftable, geared connection via a gear train, the gear train comprising a fixed gear (7) on the first shaft (2) and loose gear (8) on the second shaft (3), **characterized in that** the loose gear (8) can be gear-connected to the second shaft (3) by means of a reversing mechanism (40) and shift devices (16), a first shift device shifting a forward gear and a second shift device shifting a reverse gear.

2. Manual shift transmission according to Claim 1, **characterized in that** the reversing mechanism (40) is arranged coaxially with the second shaft (3) and comprises a first internal gear (12), which is fixedly connected to the loose gear (8), a second internal gear (15), which is fixedly connected to the second shaft (3), and planetary gears (13), which are mounted on a planet carrier (10), freely rotatable on the second shaft (3).

3. Manual shift transmission according to Claim 2, **characterized in that** the planet carrier (10) can be connected via the second shift device to the housing (4) of the manual shaft transmission in order to shift the reverse gear.

4. Manual shift transmission according to Claim 1, 2 or 3 **characterized in that** the loose gear (8) can be connected to the second shaft (3) by means of the first device in order to shift the forward gear.

5. Manual shift transmission according to Claim 2 or 3, **characterized in that** the planet carrier (10) can be connected to the loose gear (8) by means of the first shift device in order to shift the forward gear.

6. Manual shift transmission according to Claim 2 or 3, **characterized in that** the planet carrier (10) can be connected to the second shaft (3) by means of the first shift device in order to shift the forward gear.

7. Manual shift transmission according to any one of Claims 2 to 6, **characterized in that** the reversing mechanism (40) is a bevel gear differential, the internal gears (12, 15) and the planetary gears (13) being bevel gears, and each planetary gear (13) being in geared connection with the first and second internal gears (12, 15).

8. Manual shift transmission according to Claim 7, **characterized in that** the internal gears (27, 28) have different diameters and the axes (25) of the planetary bevel gears (26) are obliquely inclined.

9. Manual shift transmission according to any one of Claims 2 to 8, **characterized in that** the planet carrier (10) has a step (9), on which the loose gear (8) is rotatably supported.

10. Manual shift transmission according to Claim 9, **characterized in that** a shift device (16) is connected to the step (9) of the planet carrier (10), the loose gear (8) being mounted on the step (9) between the planetary gears (13) and the shift device (16).

11. Manual shift transmission according to any one of Claims 1 to 6, **characterized in that** the reversing mechanism is a planetary gear train (39).

12. Manual shift transmission according to any one of Claims 1 to 6, **characterized in that** the reversing mechanism is a planetary gear differential (41).

13. Manual shift transmission according to any one of Claims 2 to 12, **characterized in that** the first and second shift devices are formed by a double device (16), the double shift device (16) being mounted on the planet carrier (10), and the loose gear (8) or the second shaft (3) being connectable to the planet carrier (10) in the first shift direction, and the planet carrier (10) being connectable to the housing (4) in the second shift direction.

14. Manual shift transmission according to any one of the preceding Claims, **characterized in that** the reversing mechanism (41) is arranged inside a shift device.

15. Manual shift transmission according to any one of the preceding Claims, **characterized in that** the reverse gear is shifted by rotationally locking the loose gear (8) and the second shaft (3) together, and the forward gear is shifted by fixing the planet carrier (10) to the housing (4).

## Revendications

1. Boîte de vitesses (1) avec une marche arrière, en particulier pour des véhicules automobiles, comportant deux arbres supportés dans un boîtier (4), qui sont en liaison d'entraînement commutable par un jeu de roues dentées, dans laquelle le jeu de roues dentées comprend une roue fixe (7) sur le premier arbre (2) et une roue libre (8) sur le second arbre (3), **caractérisée en ce que** la roue libre (8) peut être amenée en liaison d'entraînement avec le second arbre (3) au moyen d'un engrenage d'inversion (40) et de dispositifs de changement de vitesse (16), dans laquelle un premier dispositif de changement de vitesse engage une marche avant et un deuxième dispositif de changement de vitesse engage une marche arrière.

2. Boîte de vitesses selon la revendication 1, **caractérisée en ce que** l'engrenage d'inversion (40) est disposé coaxialement au second arbre (3) et comprend une première couronne dentée (12), qui est solidaire de la roue libre (8), une deuxième couronne dentée (15), qui est solidaire du second arbre (3), et des roues planétaires (13), qui sont disposées sur un support de roues planétaires (10) pouvant tourner librement sur le second arbre (3).

3. Boîte de vitesses selon la revendication 2, **caractérisée en ce que**, pour l'engagement de la marche arrière, le support de roues planétaires (10) peut être relié au boîtier (4) de la boîte de vitesses par le deuxième dispositif de changement de vitesse.

4. Boîte de vitesses selon la revendication 1, 2 ou 3, **caractérisée en ce que**, pour l'engagement de la marche avant, la roue libre (8) peut être reliée au second arbre (3) au moyen du premier dispositif de changement de vitesse.

5. Boîte de vitesses selon la revendication 2 ou 3, **caractérisée en ce que**, pour l'engagement de la marche avant, le support de roues planétaires (10) peut être relié à la roue libre (8) au moyen du premier dispositif de changement de vitesse.

6. Boîte de vitesses selon la revendication 2 ou 3, **caractérisée en ce que**, pour l'engagement de la marche avant, le support de roues planétaires (10) peut être relié au second arbre (3) au moyen du premier dispositif de changement de vitesse.

7. Boîte de vitesses selon l'une quelconque des revendications 2 à 6, **caractérisée en ce que** l'engrenage d'inversion (40) est un engrenage différentiel à pignons coniques, dans laquelle les couronnes dentées (12, 15) et les roues planétaires (13) sont des pignons coniques, et chaque roue planétaire (13) est en liaison d'entraînement avec la première et la deuxième couronnes dentées (12, 15).

8. Boîte de vitesses selon la revendication 7, **caractérisée en ce que** les couronnes dentées (27, 28) présentent des diamètres différents et les axes (25) des pignons planétaires coniques (26) sont disposés en oblique.

9. Boîte de vitesses selon l'une quelconque des revendications 2 à 8, **caractérisée en ce que** le support de roues planétaires (10) présente une portée (9), sur laquelle la roue libre (8) peut être montée en rotation.

10. Boîte de vitesses selon la revendication 9, **caractérisée en ce qu'**un dispositif de changement de vitesse (16) est relié à la portée (9) du support de roues planétaires (10), dans laquelle la roue libre (8) est disposée sur la portée (9) entre les roues planétaires (13) et le dispositif de changement de vitesse (16).

11. Boîte de vitesses selon l'une quelconque des revendications 1 à 6, **caractérisée en ce que** l'engrenage d'inversion est un jeu de roues planétaires (39).

12. Boîte de vitesses selon l'une quelconque des revendications 1 à 6, **caractérisée en ce que** l'engrenage d'inversion est un engrenage différentiel à roues planétaires (41).

13. Boîte de vitesses selon l'une quelconque des revendications 2 à 12, **caractérisée en ce que** le premier et le deuxième dispositifs de changement de vitesse sont formés par un dispositif de changement de vitesse double (16), dans laquelle le dispositif de changement de vitesse double (16) est disposé sur le support de roues planétaires (10), et dans laquelle, dans la première direction d'engagement, la roue libre (8) ou le second arbre (3) peut être relié(e) au support de roues planétaires (10) et, dans la deuxième direction d'engagement, le support de roues planétaires (10) peut être relié au boîtier (4).

14. Boîte de vitesses selon l'une quelconque des revendications précédentes, **caractérisée en ce que** l'engrenage d'inversion (41) est disposé à l'intérieur d'un dispositif de changement de vitesse.

15. Boîte de vitesses selon l'une quelconque des revendications précédentes, **caractérisée en ce que** la marche arrière est engagée lorsque la roue libre (8) et le second arbre (3) sont solidaires en rotation et la marche avant est engagée lorsque le support de roues planétaires (10) est fixé au boîtier (4).
